# EUROPÄISCHE PATENTANMELDUNG

(11) **EP 3 812 335 A1**
(43) Veröffentlichungstag der Anmeldung: **28.04.2021**
(21) Anmeldenummer: 20200760.5
(22) Anmeldetag: 08.10.2020
(51) Int. Cl.: B66C 1/66

(54) **ANSCHLAGÖSE**

(30) Priorität: 21.10.2019 DE 202019105837 U
(71) Anmelder: J.D. Theile GmbH & Co. KG, D-58239 Schwerte (DE)
(72) Erfinder: KRESIC, Ivan, 58239 Schwerte (DE); MURACH, Tim, 58239 Schwerte (DE); FOITZIK, Martin, 58239 Schwerte (DE)
(74) Vertreter: Haverkamp, Jens

(57) **Zusammenfassung**

Die Erfindung betrifft eine Anschlagöse mit einem Unterteil 2 mit Mitteln zum Anschließen der Anschlagöse 1 an einen handzuhabenden oder festzulegenden Gegenstand und mit einem gegenüber dem Unterteil 2 drehbaren Wirbelteil 6, in das eine Wirbelöse 3 mit einem an jedem Schenkel 10, 10.1 angeschlossenen Lagerzapfen, jeweils in eine Lagerausnehmung 13 des Wirbelteils 6 eingreifend, gegenüber dem Wirbelteil 6 verschwenkbar eingehängt ist. Die durch die Lagerzapfen 12, 12.1 und ihren Eingriff in die Lagerausnehmungen 13 des Wirbelteils 6 definierte Schwenkachse der Wirbelöse 3 gegenüber dem Wirbelteil 6 kreuzt die in der Ebene der Wirbelöse 3 verlaufende Mittellängsebene derselben.

## Beschreibung

Die Erfindung betrifft eine Anschlagöse mit einem Unterteil mit Mitteln zum Anschließen der Anschlagöse an einen handzuhabenden oder festzulegenden Gegenstand und mit einem gegenüber dem Unterteil drehbaren Wirbelteil, in das eine Wirbelöse mit einem an jedem Schenkel angeschlossenen Lagerzapfen, jeweils in eine Lagerausnehmung des Wirbelteils eingreifend, gegenüber dem Wirbelteil verschwenkbar eingehängt ist.

Derartige Anschlagösen werden zum Heben von Gegenständen ebenso wie zum Festlegen von Gegenständen eingesetzt. Zu diesem Zweck werden die Anschlagösen an den zu hebenden Gegenstand angeschlossen. Zum Anschluss dient typischerweise eine Anschlussschraube, die durch das Unterteil der Anschlagöse hindurchgeführt ist. Wenn eine Anschlagöse dauerhaft an einem Gegenstand angeschlossen sein soll, kann das Unterteil mit dem Gegenstand auch stoffschlüssig, typischerweise durch eine Schweißung, verbunden sein. Zum Heben oder auch zum Festzurren eines Gegenstandes werden typischerweise mehrere Anschlagösen zum Einhängen eines entsprechenden Hebegeschirres verwendet. Damit sich bei Anliegen einer durch ein in die Wirbelöse eingehängtes Hebezeug diese entsprechend der darauf wirkenden Zugrichtung ausrichtet, ist die Wirbelöse gegenüber dem Unterteil schwenkbar und um die Längsachse der Anschlagöse drehbar, damit sich der Scheitel der Wirbelöse in Richtung der anliegenden Zugkraft ausrichten kann. Daher werden derartige Anschlagösen auch als Anschlagwirbel bezeichnet. Dieselben Eigenschaften einer Anschlagöse sind auch gewünscht, wenn eine solche zum Verzurren eines Gegenstandes eingesetzt werden soll.

Zum Zwecke einer Verschwenkbarkeit der Wirbelöse gegenüber dem Unterteil sind an jeden der beiden Schenkel der Wirbelöse Lagerzapfen angeformt. Diese greifen jeweils in eine entsprechende Lagerausnehmung des Wirbelteils ein. Erst ein solcher gelenkiger Anschluss der Wirbelöse gegenüber dem Unterteil mit seinem Wirbelteil und die drehbare Ausgestaltung des Wirbelteils gegenüber den feststehenden Bestandteilen des Unterteils erlauben eine Ausrichtung der Wirbelöse in Richtung der anliegenden Zugkraft, und zwar mit geringem Abstand zur Oberfläche des handzuhabenden oder zu verzurrenden Gegenstandes. Ziel ist es, ein über die Anschlagöse einwirkendes Hebelmoment möglichst gering zu halten.

Derartige Anschlagösen sind beispielsweise aus DE 20 2005 011 967 U1, DE 10 2015 223 161 A1 oder US 2004/0032134 A1 bekannt.

Bei einer solchen Anschlagöse kann es allerdings zu Situationen kommen, in denen die gewünschte Ausrichtung der Wirbelöse mit ihrem Scheitel in Richtung zur angelegten Querzugkraft weisend sich nicht von selbst ausrichtet. Zwar sind derartige Zustände selten. Diese können jedoch vorkommen, was vor allem in Situationen ungünstig ist, in denen manuell kein Einfluss auf die Ausrichtung der Wirbelöse genommen werden kann, damit sich diese in Richtung der anliegenden Zugkraft ausrichtet. Eine solche Situation kann beispielsweise eintreten, wenn handzuhabende Gegenstände mit mehreren Kränen gemeinschaftlich angehoben oder von einem Kran an einen anderen übergeben werden. Eine solche Zwangsposition, mithin eine Position der Wirbelöse gegenüber dem Unterteil, das sich diese nicht selbsttätig mit ihrem Scheitel in Richtung der anliegenden Zugkraft ausrichtet, liegt vor, wenn die anliegende Zugkraft mit der Schwenkachse der Wirbelöse gegenüber dem Wirbelteil fluchtet. Zwar ist damit zu rechnen, dass auch bei einer Handhabung eines Gegenstandes mit mehreren Kränen, wie vorstehend beschrieben, sich die Wirbelöse im Zuge der weiteren Handhabung wieder in die gewünschte Richtung ausrichtet. Dieses passiert dann aber plötzlich, wodurch die effektive Zuglänge des daran angeschlossenen Hebezeuges sich schlagartig um die Länge der Wirbelöse verlängert. Vor allem bei größeren, schwierig handzuhabenden und schweren Gegenständen ist dieses unerwünscht, vor allem wenn diese positionsgenau montiert werden müssen, wie beispielsweise Bauteile eines Windrades. Ein solches aufgrund der Befreiung aus einer Zwangslage resultierendes schlagartiges Absinken, wenn auch nur über einige Zentimeter oder Zehnerzentimeter, stellt nicht nur eine Beschädigungsgefahr des handzuhabenden und gegebenenfalls zu montierenden Bauteils sondern auch eine Gefahr für den oder die unmittelbar bei dem handzuhabenden Gegenstand befindlichen Monteure dar.

Ausgehend von diesem diskutierten Stand der Technik liegt der Erfindung daher die Aufgabe zugrunde, eine Anschlagöse der eingangs genannten Art dergestalt weiterzubilden, dass sich bei dieser, auch wenn eine anliegende Zugkraft mit der Schwenkachse der Wirbelöse gegenüber dem Wirbelteil fluchtet, keine Zwangsposition, wie zum Stand der Technik vorbeschrieben, einstellt, sondern die Wirbelöse geschmeidig in Richtung der anliegenden Zugkraft ausrichtet.

Gelöst wird diese Aufgabe erfindungsgemäß durch eine eingangs genannte, gattungsgemäße Anschlagöse, bei der die durch die Lagerzapfen und ihren Eingriff in die Lagerausnehmungen des Wirbelteils definierte Schwenkachse der Wirbelöse gegenüber dem Wirbelteil die in der Ebene der Wirbelöse verlaufende Mittellängsebene derselben kreuzt.

Von Besonderheit bei dieser Anschlagöse ist, dass die Schwenkachse der Wirbelöse gegenüber dem Wirbelteil, die in der Ebene der Wirbelöse verlaufende Mittellängsebene kreuzt. Erreicht wird dieses durch eine besondere Anordnung der Lagerzapfen und dementsprechend der Lagerausnehmungen, um ihren Eingriff in die Lagerausnehmungen des Wirbelteils, durch welche Zusammenspiel die Schwenkachse definiert ist. Liegt an der gegenüber dem Unterteil aufgerichteten Wirbelöse eine Querkraft an, die mit der Schwenkachse der Wirbelöse gegenüber dem Wirbelteil fluchtet, ist hierdurch keine Zwangsposition gegeben, da bei Anliegen einer solchen Zugkraft diese tatsächlich winklig zur Ebene der Wirbelöse angreift. Dieser bezüglich der Mittellängsebene winklige Kraftangriff induziert ein Drehmoment und führt somit zu einer Drehbewegung der Wirbelöse gegenüber dem Unterteil. Ist die Wirbelöse gegenüber dem feststehenden Unterteil um einige Winkelgrade gedreht, ist der Kraftangriff nicht mehr in der Flucht der Schwenkachse, sodass anschließend die Wirbelöse gegenüber dem Wirbelteil verschwenkt und sich mit ihrem Scheitel in Richtung der anliegenden Zugkraft ausrichten kann. Wirkt bei einer anderen Zugkraft Beaufschlagung auf die aufgerichtete Wirbelöse eine Querkraft in der Ebene der Mittellängsebene auf die Wirbelöse, stellt auch dieses keine Zwangsposition dar, aus der sich die Wirbelöse nicht selbsttätig befreien kann. Aufgrund der die Mittellängsebene kreuzenden Schwenkachse wird bei einer solchen Beanspruchung der Anschlagöse ein Kippmoment eingeleitet, durch die die Wirbelöse aus ihrer aufrechten Position in Richtung zur anliegenden Zugkraft verschwenkt wird, um sich anschließend mit ihrem Scheitel in Richtung der anliegenden Zugkraft auszurichten, was mit einer Drehbewegung Wirbelöse mit dem Wirbelteil gegenüber den feststehenden Teilen des Unterteils einhergeht. Aus diesem Grunde gibt es bei dieser Anschlagöse keine Zwangsposition, wie dieses zu Anschlagösen aus dem Stand der Technik beschrieben ist. Durch die beschriebene Auslegung der Anschlagöse ist also gewährleistet, dass sich die Wirbelöse gegenüber dem Unterteil, egal von welcher Querrichtung auf die Wirbelöse eine Zugkraft einwirkt, diese sich mit ihrem Scheitel in Richtung der anliegenden Zugkraft ausrichten wird.

Gemäß einer ersten Ausgestaltung sind die Schenkel gegenüber der Mittellängsebene der Wirbelöse in entgegengesetzte Richtungen ausgestellt. Grundsätzlich ist eine solche Maßnahme bereits allein ausreichend, um den vorbeschriebenen Effekt zu erzielen. Entsprechend dimensioniert sind die Lagerausnehmungen des Wirbelteils ausgeführt.

In einer Weiterbildung einer solchen Anschlagöse ist vorgesehen, dass die an die Schenkel angeschlossenen, typischerweise angeformten Lagerzapfen mit ihrer Längsachse in Richtung zur Drehachse des Wirbelteils gegenüber dem Unterteil orientiert sind, vorzugsweise soweit, dass die Längsachsen der Lagerzapfen miteinander fluchten und eine gedachte, die Längsachsen der Lagerzapfen verbindende Gerade die Drehachse des Wirbelteils gegenüber dem Unterteil schneidet oder nur mit geringem Abstand an dieser vorbeiläuft.

Hergestellt wird gemäß einer Ausführung die Wirbelöse einer solchen Anschlagöse durch einen Schmiedeprozess. Hierzu bietet es sich an, die Querschnittsgeometrie der Lagerzapfen des Ösenteils oval auszulegen, was die Werkzeuggeometrie und die gewünschte Entformbarkeit vereinfacht. Die Querschnittsgeometrie der Lagerzapfen kann jedoch auch anders ausgebildet sein, beispielsweise rund oder mit einer anderen Querschnittsgeometrie mit abgerundeten Kanten. Bei einer solchen Ausgestaltung verläuft die Langachse der Querschnittsgeometrie senkrecht zur Längserstreckung der Wirbelöse. Die Kurzachse ist außermittig bezüglich der Erstreckung der Langachse angeordnet, und zwar in Richtung der Ausstellung des Schenkels zur Mitte versetzt.

Ist die Wirbelöse als Schmiedeteil ausgeführt, kann diese ohne Weiteres weitere Elemente aufweisen, wie beispielsweise einen die Schenkel mit geringem Abstand zum wirbelösenseitigen Abschluss des Unterteils verbindenden Ösensteg. Ein solcher Ösensteg versteift die Wirbelöse und sichert den dauerhaften Eingriff der an die Enden der Schenkel angeformten Lagerzapfen in die komplementären Lagerausnehmungen des Wirbelteils.

Der Winkel, mit dem die Schwenkachse der Wirbelöse gegenüber dem Unterteil die Mittellängsebene der Wirbelöse kreuzt, sollte zumindest 10° betragen. Eine Auslegung einer solchen Anschlagöse mit einem geringeren Winkel zwischen der Schwenkachse der Winkelöse gegenüber dem Unterteil und der Mittellängsebene ist zwar grundsätzlich möglich. Allerdings bewirken die angreifenden Zugkräfte vor dem Hintergrund existierender Haftreibungen zwischen den gegeneinander beweglichen Elementen das Gewünschte besser, wenn dieser Winkel zumindest 10° beträgt. Auch macht es wenig Sinn, diesen Winkel übermaßen groß zu wählen, da dann bei einer Ausgestaltung der Anschlagöse, bei der die Schenkel gegenüber der Mittellängsebene in entgegengesetzte Richtungen ausgestellt sind, der Betrag der Ausstellung recht groß wäre, mit der Folge, dass dann die an die Schenkel angeformten Lagerzapfen entsprechend länger ausgelegt werden müssten. Dieses ist jedoch ungünstig für eine Kraftübertragung von der Wirbelöse in das Unterteil und umgekehrt. Derzeit bevorzugte Ausgestaltungen weisen einen Winkel zwischen der Schwenkachse der Wirbelöse gegenüber dem Unterteil mit der Mittellängsebene der Wirbelöse von 12° - 15° auf. Der erfindungsgemäße Effekt lässt sich auch erzielen, wenn der vorstehend diskutierte Winkel weniger als 10° beträgt, sinnvollerweise jedoch mehr als 4 bis 5°.

Bei der beschriebenen Anschlagöse kann die gewünschte Drehbarkeit des Wirbelteils gegenüber den übrigen Bestandteilen des Unterteils auf beliebiger Art verwirklicht sein. Beispielsweise kann die Drehbarkeit über ein Gleitlager oder auch über ein oder auch mehrere Kugel- oder Rollenlager realisiert sein.

Nachfolgend ist die Erfindung unter Bezugnahme auf die beigefügten Figuren anhand eines Ausführungsbeispiels beschrieben. Es zeigen:
- **Fig. 1:**: eine perspektivische Ansicht einer Anschlagöse gemäß der Erfindung,
- **Fig. 2:**: eine Längsschnittdarstellung durch die Anschlagöse der Figur 1,
- **Fig. 3:**: eine perspektivische Seitenansicht der Wirbelöse der Anschlagöse der Figuren 1 und 2,
- **Fig. 4:**: eine gegenüber der Schnittdarstellung der Figur 2 versetzte Schnittdarstellung der Anschlagöse der Figur 1,
- **Fig. 5:**: einen Horizontalschnitt durch die Anschlagöse der Figur 1 entlang der Schnittlinie A - A der Figur 2,
- **Fig. 6:**: die Anschlagöse in der Schnittdarstellung der Figur 5 bei einer auf die Wirbelöse in der Flucht ihrer Mittellängsebene einwirkenden Zugkraft und
- **Fig. 7:**: die Anschlagöse in der Schnittdarstellung der Figur 5 bei einer auf die Wirbelöse in der Flucht ihrer Schwenkachse gegenüber dem Unterteil einwirkenden Zugkraft.

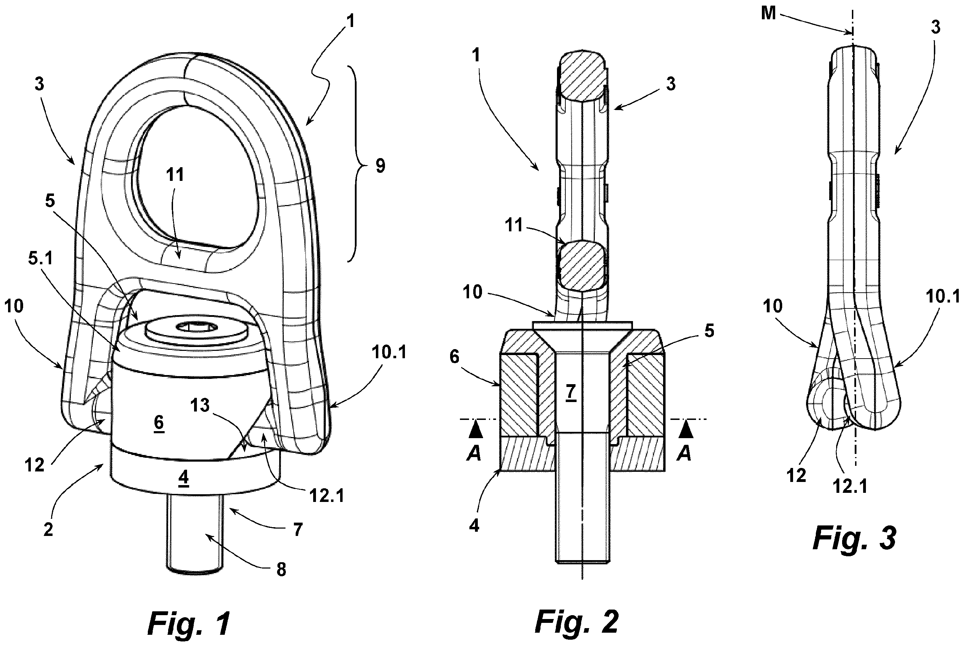

Eine Anschlagöse 1 umfasst ein Unterteil 2 und eine Wirbelöse 3. Das Unterteil 2 umfasst eine Scheibe 4, deren in Figur 1 erkennbare Unterseite an einen handzuhabenden oder zu verzurrenden Gegenstand anliegt, ein Hülsenteil 5, von dem in Figur 1 nur der obere in radialer Richtung auskragende Flanschabschluss 5.1 und ein Wirbelteil 6. Das Hülsenteil 5 ist mit der Scheibe 4 durch einen Presssitz (siehe Figur 2) verbunden. Das Wirbelteil 6 ist ein ringzylindrisches Bauteil, welches zwischen der Oberseite der Scheibe 2 und der Unterseite des Flanschabschlusses 5.1 des Hülsenteils 5 drehbar ist. Zum Anschließen der Anschlussöse 1 an einen handzuhabenden oder zu verzurrenden Gegenstand dient eine Befestigungsschraube 7, die mit ihrem Schaft das Unterteil 2 durchgreift. Diese ist ebenfalls dem Unterteil 2 zugehörig. Der aus dem Unterteil 2 herausragende Teil des Gewindeabschnittes ist in Figur 1 mit dem Bezugszeichen 8 kenntlich gemacht.

Das Wirbelteil 6 ist, wie aus Figur 2 zu erkennen ist, gegenüber dem Hülsenteil 5 und der Scheibe 2 nach Art eines Gleitlagers um die Längsachse des Hülsenteils 5 drehbar gelagert.

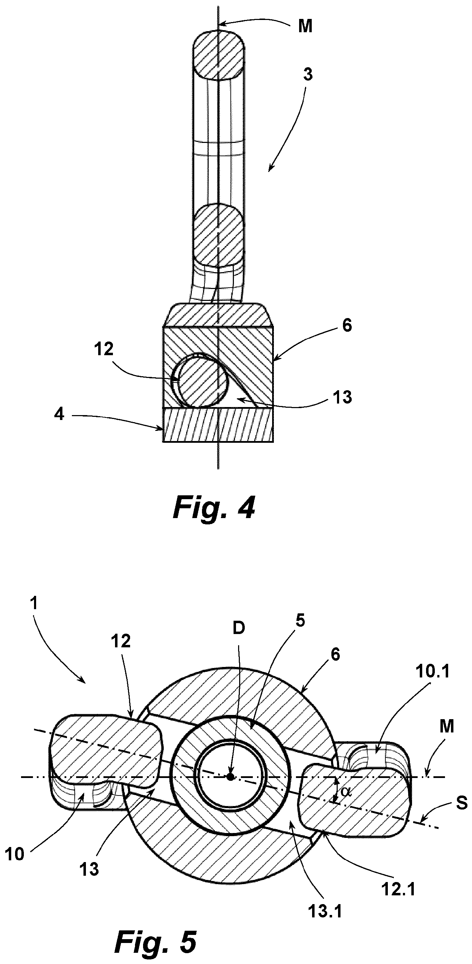

Die Wirbelöse 3 des dargestellten Ausführungsbeispiels verfügt über einen oberen Anschlagabschnitt 9. Bei dem dargestellten Ausführungsbeispiel ist dieser in Richtung zu dem Unterteil der Anschlagöse durch einen die beiden Schenkel 10, 10.1 der Wirbelöse 3 verbindenden Ösensteg 11 begrenzt. Der Anschlagabschnitt 9 dient zum Einhängen eines Kranhakens, eines Gurtes oder eines anderen Hebe- oder Zurrmittels. Unterhalb des Ösensteges 11 setzen sich die Schenkel 10, 10.1 fort. Diese tragen an ihren inneren, zueinander weisenden Seiten jeweils einen Lagerzapfen 12, 12.1. Die an den unteren Enden der Schenkel 10, 10.1 angeformten, abragenden Lagerzapfen 12, 12.1 greifen in radialer Richtung in das Wirbelteil 6 ein, welches zu diesem Zweck entsprechende Lagerausnehmungen 13, 13.1 aufweist (siehe auch Figur 5).

Bei der Wirbelöse 3 der Anschlagöse 1 sind die unteren Abschnitte der Schenkel 10, 10.1 - die Abschnitte unterhalb des Ösensteges 11 - gegenüber der Mittellängsebene M in der Ebene der Wirbelöse 3 in entgegengesetzte Richtungen ausgestellt, wie dieses zwar aus der perspektivischen Ansicht der Figur 1 ersichtlich, jedoch aus der Seitenansicht der Wirbelöse 3 der Figur 3 oder auch der Schnittdarstellung der Figur 4 deutlicher erkennbar ist. Die Querschnittsgeometrie der Lagerzapfen 12, 12.1 ist in Figur 3 durch den Lagerzapfen 12 erkennbar. Die Querschnittsgeometrie ist ovalförmig, wobei die Langachse quer zur Mittellängsebene M verläuft. Die Kurzachse ist in Bezug auf das Zentrum der Querschnittsfläche des Lagerzapfens 12 nach außen hin und somit in Richtung des Ausrückens des Schenkelendes hin versetzt. Eine solche Querschnittsgeometrie ist zweckmäßig, wenn die Wirbelöse 3 ein Schmiedeteil ist, mithin durch einen Schmiedevorgang in seine in Figur 3 gezeigte Form gebracht worden ist.

Figur 4 zeigt eine Schnittdarstellung entsprechend derjenigen der Figur 2, jedoch bezüglich ihrer Schnittebene nicht in der Mitte des Ösenwirbels, sondern zum Rand des Wirbelteils 6 hin versetzt. In dieser Darstellung ist der Lagerschenkel 12 und sein Eingriff in die Lagerausnehmung 13 des Wirbelteils 6 erkennbar. Aus dieser Darstellung ist die Umrissgeometrie der Lagerausnehmung 13 erkennbar. Die Geometrie der Lagerausnehmung 13 ähnelt dem Endabschnitt eines geneigt radial in das Wirbelteil 6 eingebrachten Langloches. Die Langachse der Lagerausnehmung 13 ist somit gegenüber der Mittellängsebene M geneigt. Grund für die Auslegung der Lagerausnehmung 13 in dieser Form ist, dass die Lagerzapfen 12, 12.1 nicht nur aufgrund der Ausstellung der Schenkel 10, 10.1 gegeneinander versetzt sind, sondern auch in Richtung aufeinander zu und somit in Richtung zu der Drehachse D des Wirbelteils 6 gegenüber den Schenkeln 10, 10.1 verstellt sind. Die diesbezügliche Auslegung der Lagerzapfen 12, 12.1 ist in der Schnittdarstellung der Figur 5 erkennbar. Die Längsachsen der Lagerzapfen 12, 12.1 bei diesem Ausführungsbeispiel fluchten miteinander, wobei die fluchtenden Langachsen die Drehachse D schneiden. Diese Achse stellt die Schwenkachse S der Wirbelöse 3 gegenüber dem Wirbelteil 6 dar.

Die Schnittdarstellung der Figur 5 visualisiert zudem, wie die Schenkel 10, 10.1 in entgegengesetzte Richtungen bezüglich der Mittellängsebene ausgestellt sind.

Wie die Schnittdarstellung der Figur 5 zeigt, kreuzt die Schwenkachse S die Mittellängsebene M. Der Schnittwinkel α beträgt bei dem dargestellten Ausführungsbeispiel 12°.

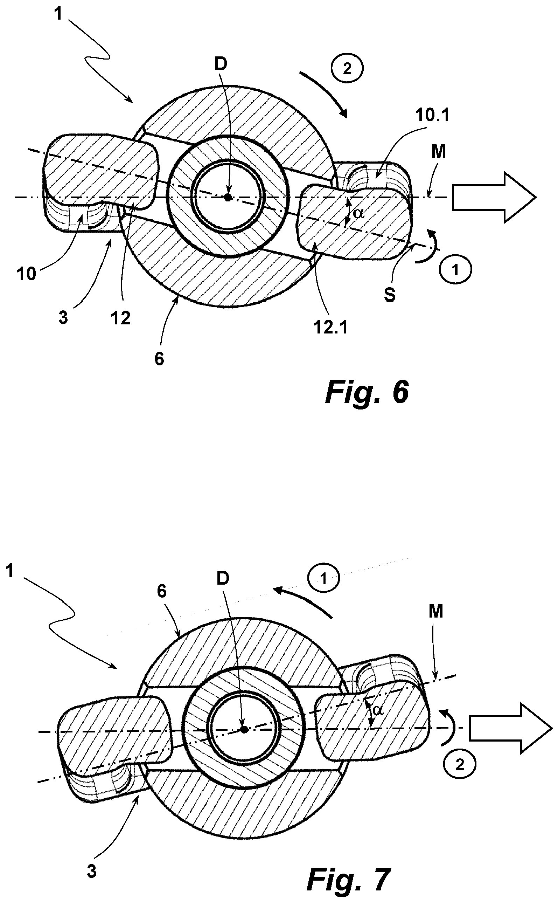

Die vorbeschriebene Auslegung der Anschlagöse 1 hat zur Folge, dass sich keine Zwangslage der Wirbelöse 3 gegenüber dem Unterteil 2 einstellen kann, mithin in jeder Situation eines Kraftangriffes bei aufgerichteter Wirbelöse 3 gegenüber dem Unterteil 2 sich diese in Richtung der angelegten Zugkraft ausrichten wird. Dieses gilt beispielsweise für eine Stellung, bei der eine Zugkraft in der Flucht der Mittellängsebene M bei gegenüber dem Unterteil 2 aufgerichteter Wirbelöse 3 angreift. Diese Stellung der Wirbelöse 3 gegenüber dem Unterteil 2 konnte bei vorbekannten Anschlagösen eine Zwangslage zur Folge haben. Figur 6 zeigt die diesbezügliche Beanspruchung der Anschlagöse 1. Die anliegende Zugkraft greift, wie durch den Blockpfeil kenntlich gemacht, an der Wirbelöse 3 horizontal in der Flucht der Mittellängsebene M an. Die in Figur 6 schematisiert gezeigte angelegte Kraft wirkt auf die Wirbelöse 3 der Anschlagöse 1 zwar in der Flucht der Mittellängsebene, jedoch winklig zur Schwenkachse S gegenüber dem Unterteil 2. Infolgedessen wird die Wirbelöse 3 zunächst um einen gewissen Betrag um die Schwenkachse S verschwenkt werden und sich anschließend unter Drehung um die Drehachse D in Richtung der angelegten Kraft ausrichten. Diese beiden Schritte sind in der Figur kenntlich gemacht. Damit kann bei einem solchen Krafteingriff bei der Anschlagöse 1 keine Zwangslage eintreten.

Figur 7 zeigt die Anschlagöse 1 mit einem Zugkraftangriff in der Flucht der Schwenkachse S. Da die anliegende Zugkraft winklig zur Mittellängsebene M in die Wirbelöse 3 eingeleitet wird, induziert dieses ein Drehmoment, sodass nach einer Drehung des Wirbelteils 3 um die Drehachse D die anliegende Kraft winklig zur Schwenkachse S anliegt und hierdurch wiederum ein Verschwenken der Wirbelöse 3 gegenüber dem Wirbelteil 6 erfolgt mit der Folge, dass sich die Wirbelöse 3 wiederum in Richtung der anliegenden Zugkraft verschwenkt und ausrichtet. Auch in dieser Figur sind die beiden Schritte kenntlich gemacht.

Die vorstehenden Effekte können auch bei einer in den Figuren nicht dargestellten Anschlagöse realisiert werden, bei denen zwar die Schenkel in voneinander wegweisende Richtungen gegenüber der Mittellängsebene verstellt sind, jedoch die Lagerzapfen nicht ihrer Längsachse fluchtend oder annähernd fluchtend ausgerichtet sind. Auch bei einer solchen Ausgestaltung kreuzt die Schwenkachse die Mittellängsebene. Eine Krafteinleitung von den Lagerzapfen in die Lagerfläche der Lagerausnehmung ist jedoch bei einer Ausgestaltung, bei der die Lagerzapfen mit ihrer Längsachse in Richtung aufeinander zu verstellt sind, verbessert.

Bei den beschriebenen Ausführungsbeispielen greifen die Lagerzapfen der Schenkel in Lagerausnehmungen des Wirbelteils des Unterteils ein. Diese Lagerausnehmungen können auch durch in das Wirbelteil eingesetzte Einsätze realisiert sein.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umzusetzen, ohne dass derartige Ausgestaltungen im Rahmen dieser Ausführungen erwähnt werden müssten.

### Bezugszeichenliste

- 1: Anschlagöse
- 2: Unterteil
- 3: Wirbelöse
- 4: Scheibe
- 5: Hülsenteil
- 5.1: Flanschabschluss
- 6: Wirbelteil
- 7: Befestigungsschraube
- 8: Gewindeabschnitt
- 9: Anschlagabschnitt
- 10, 10.1: Schenkel
- 11: Ösensteg
- 12, 12.1: Lagerzapfen
- 13: Lagerausnehmung
- D: Drehachse
- M: Mittellängsebene
- S: Schwenkachse

## Patentansprüche

1. Anschlagöse mit einem Unterteil (2) mit Mitteln zum Anschließen der Anschlagöse (1) an einen handzuhabenden oder festzulegenden Gegenstand und mit einem gegenüber dem Unterteil (2) drehbaren Wirbelteil (6), in das eine Wirbelöse (3) mit einem an jedem Schenkel (10, 10.1) angeschlossenen Lagerzapfen (12, 12.1), jeweils in eine Lagerausnehmung (13, 13.1) des Wirbelteils (6) eingreifend, gegenüber dem Wirbelteil (6) verschwenkbar eingehängt ist, **dadurch gekennzeichnet, dass** die durch die Lagerzapfen (12, 12.1) und ihren Eingriff in die Lagerausnehmungen (13, 13.1) des Wirbelteils (6) definierte Schwenkachse (S) der Wirbelöse (3) gegenüber dem Wirbelteil (6) die in der Ebene der Wirbelöse (3) verlaufende Mittellängsebene (M) derselben kreuzt.

2. Anschlagöse nach Anspruch 1, **dadurch gekennzeichnet, dass** die Schenkel (10, 10.1) gegenüber der Mittellängsebene (M) der Wirbelöse (3) in entgegengesetzte Richtungen ausgestellt sind.

3. Anschlagöse nach Anspruch 2, **dadurch gekennzeichnet, dass** die an die Schenkel (10, 10.1) angeformten Lagerzapfen (12, 12.1) mit ihrer Längsachse in Richtung zur Drehachse (D) des Wirbelteils (6) gegenüber dem Unterteil (2) orientiert sind.

4. Anschlagöse nach Anspruch 3, **dadurch gekennzeichnet, dass** eine die Längsachsen der Lagerzapfen (12, 12.1) verbindende Gerade die Drehachse (D) des Wirbelteils (6) gegenüber dem Unterteil (2) schneidet oder mit Abstand an dieser vorbeiläuft.

5. Anschlagöse nach einem der Ansprüche 2 bis 4, **dadurch gekennzeichnet, dass** die Lagerzapfen (12, 12.1) eine ovalförmige Querschnittsgeometrie aufweisen, wobei die Langachse dieser Querschnittsgeometrie senkrecht zur Längserstreckung der Wirbelöse (3) verläuft und die Kurzachse außermittig, in Richtung der Ausstellung des jeweiligen Schenkels (10, 10.1), an den der Lagerzapfen (12, 12.1) angeformt ist, versetzt angeordnet ist.

6. Anschlagöse nach einem der Ansprüche 1 bis 5, **dadurch gekennzeichnet, dass** der von der Schwenkachse (S) der Wirbelöse (3) gegenüber dem Unterteil (2) mit der Mittellängsebene (M) eingeschlossene Winkel (a) zumindest 10° beträgt, insbesondere etwa 12° - 15° beträgt.

7. Anschlagöse nach einem der Ansprüche 1 bis 6, **dadurch gekennzeichnet, dass** die Wirbelöse (3) einen die beiden Schenkel (10, 10.1) verbindenden Ösensteg (11) aufweist.

8. Anschlagöse nach einem der Ansprüche 1 bis 7, **dadurch gekennzeichnet, dass** die Wirbelöse (3) der Anschlagöse (1) ein Schmiedeteil ist.

9. Anschlagöse nach einem der Ansprüche 1 bis 8, **dadurch gekennzeichnet, dass** die Lagerausnehmungen (13, 13.1) des Wirbelteils (6) eine langlochartige Umrissgeometrie aufweisen, deren Langachse gegenüber einer Vertikalen geneigt ist.

10. Anschlagöse nach einem der Ansprüche 1 bis 9, **dadurch gekennzeichnet, dass** das Wirbelteil (6) mittels eines Gleitlagers gegenüber den feststehenden Teilen des Unterteils (2) drehbar ist.
